# EUROPEAN PATENT SPECIFICATION

(11) **EP 4 074 457 B1**
(45) Date of publication and mention of the grant of the patent: **13.09.2023**
(21) Application number: 22167636.4
(22) Date of filing: 11.04.2022
(51) Int. Cl.: B23Q 1/03

(54) **WORKPIECE LOCKING SYSTEM AND METHOD FOR WORKING CENTRES**
WERKSTÜCKVERRIEGELUNGSSYSTEM UND VERFAHREN FÜR ARBEITSZENTREN
SYSTÈME DE VERROUILLAGE DE PIÈCE ET PROCÉDÉ POUR CENTRES D'USINAGE

(30) Priority: 14.04.2021 IT 202100009452
(43) Date of publication of application: 19.10.2022
(73) Proprietor: C.M.S. S.p.A., 24019 Zogno (BG) (IT)
(72) Inventor: MANTEGA, Claudio, 60019 Senigallia (AN) (IT); MAZZA, Michele, 47923 Rimini (RN) (IT)
(74) Representative: Luppi Intellectual Property S.r.l.

(56) References cited:
- US-A- 6 029 966

## Description

### Background of the invention

The invention relates to a workpiece locking system for working centres, in particular, a system for locking at least one workpiece that has to be worked in a numerically controlled working centre.

Specifically, but not exclusively, the invention can be applied to lock workpieces with a non-flat surface and/or complex shape, for example workpieces having a double curvature surface, also of reduced dimensions, in particular for workpieces made of various materials, for example aluminium, plastics, composite materials, light alloys, etc.

In particular, the present invention relates to a locking system comprising a plurality of locking members, for example of suction type (suction cups), which are positionable in such a manner as to define a locking surface configured to maintain a workpiece securely in the work position in which each locking member is carried by a support rod extending vertically and slidable vertically independently of the other rods. This enables the respective locking member to be positioned at a different height from the other locking members.

A locking system of this type is already known, for example from patent publication WO 2015/019210 A1 of the same applicant. Another locking system of this type is known from patent publication EP 0 537 674 A1, on which the preamble of claim 1 is based.

One disadvantage of the prior art is that in the holes in which the support rods are slidable, dirt and residues can gather that derive from the workpiece being worked, like for example chips.

Another disadvantage of known locking systems is that the support rods and/or the holes can get worn and deformed.

During the descent step, this means that the support rods may get locked at an undesired height, resulting in imprecise or incorrect positioning of the workpiece.

Various aspects of the prior art are thus improvable.

It is desirable to make available a workpiece locking method and system that enable a workpiece to be positioned correctly, in particular in dirty environments, and/or in a state of deformation of the components.

It is desirable to make available a locking system that is constructionally simple and cheap, in particular by permitting elements to be used that are simple constructionally, cheap and easily procurable.

It is desirable to provide a system and a method that enable engineering of the system to be optimized, slashing system manufacturing and design costs.

### Summary of the invention

One object of the invention is to improve known systems and methods for locking workpieces for working centres.

One object is to provide a workpiece locking system and method that are able to overcome one or more of the aforesaid limits and drawbacks of the prior art.

One object is to provide a workpiece locking system and method that are alternative to those of the prior art.

One advantage is to provide a locking system for working centres that is constructionally simple and cheap, in particular a locking system with a structure that enables engineering thereof to be optimized.

One advantage is to provide a workpiece locking system that positions correctly locking members even in the presence of dirt.

One advantage is to provide a system that positions the locking members correctly even if some components, like the support rods and/or the holes in which the support rods run, are deformed.

Such objects and advantages, and still others, are achieved by a system and a method according to one or more of the claims set out below.

In one embodiment, a system for locking a workpiece comprises support rods carrying locking members for maintaining a workpiece, support means provided with holes, each support rod being movable vertically independently of one another within a respective hole, stop means for locking the support rod, a positioning table for moving the support rods, coupling means for coupling in a removable manner the positioning table and each support rod to drag downwards each support rod so as to overcome friction between the support rod and hole, the coupling means removing the coupling when the stop means locks each support rod.

In one embodiment, a locking method comprises removably coupling the support rods with the positioning table and further lowering the positioning table to remove coupling when the support rods are locked.

### Short description of the drawings

The invention can be better understood and implemented with reference to the accompanying drawings, which illustrate an embodiment thereof by way of non-limiting example, in which:
Figure 1 is a side view in a vertical elevation of a workpiece locking system according to the invention, with some inner parts in dashed line, in which the positioning table is lowered to a lower vertical height;
Figure 2 shows the locking system of Figure 1, in which the positioning table is raised to an upper vertical height;
Figure 3 shows the locking system of Figure 1, in a support rod positioning step according to desired heights;
Figure 4 is a plan view of support means.
Figure 5 is an isometric view of a portion of the locking system of Figure 1.

### Detailed description

With reference to the aforesaid figures, a workpiece locking system is disclosed to maintain a workpiece in position. In particular, the workpiece locking system 1 is usable in a working centre, as a stock removing machining centre and/or an additive manufacturing working centre. The workpiece locking system 1 can be suitable for maintaining a workpiece with a non-flat surface and/or complex shape, for example a workpiece having a surface with a double curve, also of reduced dimensions, of various materials, for example aluminium, plastics, composite materials, light alloys, etc.

The workpiece locking system 1 can comprise, in particular, two or more locking members 2, or gripping members, to maintain the workpiece gripped. The locking members 2 are so positionable as to define a support surface configured to maintain in a fixed work position a workpiece (for example in the form of a plate or sheet). Each locking member 2 can comprise a gripping device, in particular a vacuum like, for example a suction cup to maintain the workpiece being machined securely.

The workpiece locking system 1 can comprise, in particular, for each locking member 2, a support rod 3 that extends vertically and carries the locking member 2. Each support rod 3 is movable vertically with respect to the other support rods 3 to make possible vertical positioning of the respective locking member 2 at a different vertical height from the other locking members 2. This enables the locking members 2 to adapt to the shape of the surface of the workpiece being worked.

In the specific embodiment shown in the figures, the locking member 2 is arranged on the upper end of the support rod 3. Each locking member 2 can comprise a flat or three-dimensional joint connected to the upper end of the respective rod, to make possible positioning of the locking member 2 according to several degrees of freedom.

In the specific embodiment shown in the figures, the workpiece locking system 1 comprises a matrix of 400 locking elements 2 each of which is coupled with a respective support rod 3. Nevertheless, several locking systems 1 can be placed alongside (for example 4), which are also movable relatively to one another, so as to increase the resolution of the positioning of the workpiece, on the basis of the dimensions and the complexity of the support surface of the workpiece itself.

The workpiece locking system 1 can comprise, in particular, support means 4. The support means 4 is provided with two or more holes 4a, within each of which a respective support rod 3 is movable (slidable) vertically.

The support rod 3 and the respective hole 4a are coupled with reduced clearance to ensure positioning precision between the support rod 3 (or equivalently between the locking member 2) and the support means 4 so as to achieve stable and precise support of the workpiece.

In the small space comprised between two facing surfaces of the coupling between a support rod 3 and the respective hole 4a dust, dirt, chips or detritus of material removed or added by working can accumulate. Over time, this can increase friction between the support rod 3 and respective hole 4a, compromising the corresponding sliding and affecting correct positioning of the locking member 2.

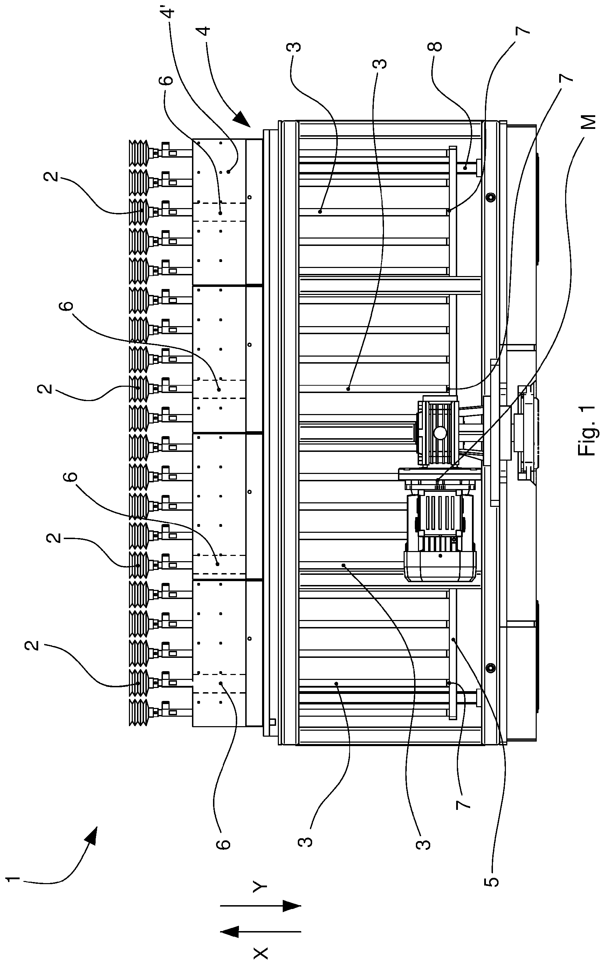

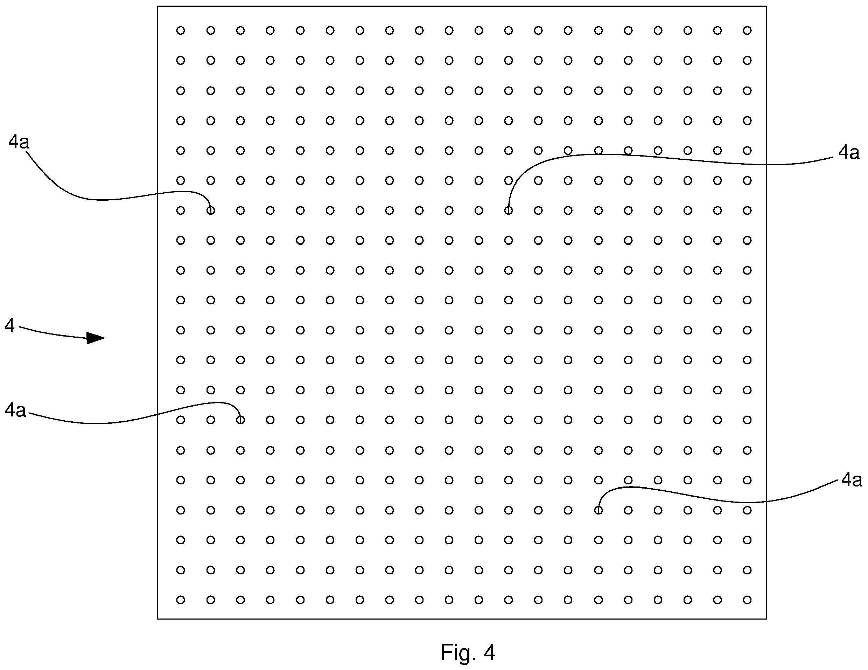

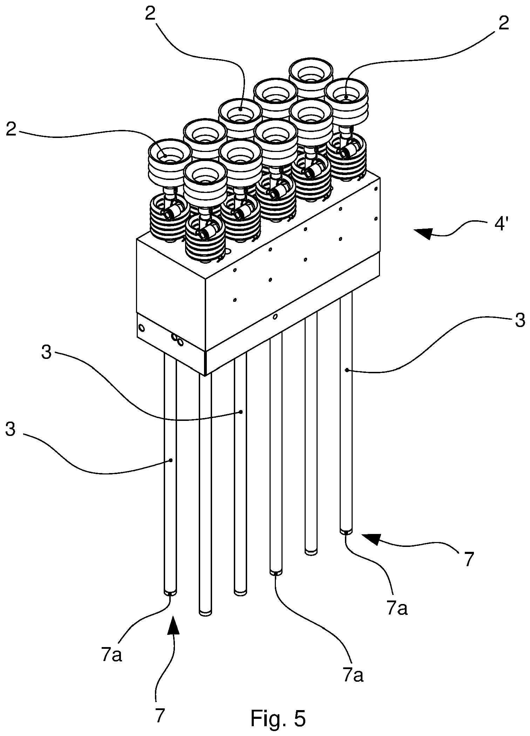

The support means 4 can comprise a support plate 4 (Figures 1 and 4) and/or several support blocks 4' alongside one another (Figures 1 and 5).

In the specific embodiment shown in the figures, the support means 4 is provided with circular holes 4a passing through a thickness of the support means 4 and the support rods 3 are cylinder-shaped. This permits rotation of the support rod 3 inside the hole 4a. Nevertheless, holes of different shape can be provided that are compatible with the shape of the respective support rod.

The workpiece locking system 1 can comprise in particular, for each support rod 3, stop means 6 configured to lock the respective support rod 3 in position with respect to the support means 4. In the specific embodiment shown in Figures 1, 2 and 3, the stop means 6 is indicated by a dashed line and is arranged at the support means 4. The stop means 6 can comprise a brake, for example a hydraulic or pneumatic brake. Alternatively, the stop means 6 can comprise a mechanical (friction), magnetic, electromagnetic etc brake.

The workpiece locking system 1 can comprise, in particular, at least one positioning table 5 that is vertically movable with respect to the plate means 4. The positioning table 5 is configured to interact in contact with the support rods to move the support rods vertically. In the specific embodiment shown in the figures, the positioning table 5 is arranged below the plate means 4.

The positioning table 5 can be shaped in particular as a plate (or slab) having an upper surface facing the end portions of the support rods 3.

The workpiece locking system 1 can comprise actuator means M configured to move the positioning table 5. The actuator means M can comprise, in particular, a motor unit for generating mechanical power, in particular producing rotational motion, and a transmission unit 8 for transferring the mechanical power to the positioning table 5. The transmission unit 8 can comprise one or more screw-nut screw devices (for example 4) to convert the rotational motion of the motor unit into linear (in particular vertical) motion of the positioning table 5. The transmission unit 8 can comprise one or more transmission belts or chains (not shown) to synchronize the motor unit and the screw-nut screw devices.

In a further embodiment, the actuator means M can comprise linear actuators, in particular hydraulic or pneumatic linear actuators. In another embodiment, the linear actuators can comprise linear electric motors.

The workpiece locking system 1 comprises, in particular, for each support rod 3, coupling means 7 configured to couple removably the positioning table 5 with the support rod so that the positioning table 5 drags downwards the support rod 3 to overcome a friction force between the support rod 3 and the respective hole 4a. The coupling means 7 is so configured as to remove coupling between the positioning table 5 when the stop means 6 locks the support rod 3 in position and the positioning table 5 moves downwards, moving away from the support rod 3. The coupling between the positioning table 5 and the respective support rod 3 is removed because the stop means 6 exerts an arrest force on each support rod 3 that is greater than a coupling force between each support rod 3 and the positioning table 5.

The coupling means 7 can comprise, in particular, magnetic coupling means provided with a magnetic element 7a to make a magnetic force coupling. The magnetic element 7a can comprise a permanent magnet (magnet) for example made of iron, neodymium, nickel, cobalt, etc.

The magnetic element 7a can comprise, in particular, an electromagnet that can be driven by a dedicated circuit.

With reference to the specific embodiment shown in the figures, the magnetic element 7a can be arranged on the end portion of each support rod 3a to interact with the positioning table 5. In particular, the positioning table 5 can comprise at least one ferromagnetic surface arranged below each support rod 3 to be attracted by the magnetic element 7a. The at least one ferromagnetic surface can extend over most of the upper face of the positioning table 5. Alternatively, it is possible to provide a plurality of ferromagnetic surfaces, each of which is arranged below a respective support rod 3.

In a further embodiment that is not illustrated, it is possible to provide ferromagnetic surfaces arranged on the lower ends of the support rods 3 and at least one magnetic element arranged on the upper face of the positioning table 5.

Additionally or alternatively, the coupling means 7 can comprise, in particular, a protrusion, like a pin, and a cavity shaped to receive with interference the protrusion so as to achieve a shape coupling.

The locking system 1 can comprise, in particular, sensor means configured to detect the position of each support rod 3, in particular with respect to the support means 4. The sensor means can be of optical, or magnetic, or inductive, or capacitive, etc type. The sensor means can be positioned on each support rod 3 and/or on the support means 4. In one embodiment, magnetic sensor means can be provided, in particular magnetostrictive sensor means, arranged on the support rod 3 and on the support means 4, for example near the respective hole 4a. Alternatively or additionally, optical sensor means can be provided, as laser sensor means, arranged on each locking member 2 (for example on the suction cup) configured to send a laser beam to the support means 4 to measure a distance between the respective locking member 2 and the support means 4.

The workpiece locking system 1 comprises, in particular, control means for running a positioning process for positioning the locking members 2. The control means can be coupled operationally with the actuator means M, in particular to control torque and/or rotation speed and/or a rotation direction of the actuator means M. The control means can be coupled operationally with the stop means 6 to control the stop means 6 so as to lock the respective support rod 3. The control means is configured to raise the positioning table 5 to an upper vertical height, pushing the support rods 3 upwards.

The control means is configured for coupling removably the support rods 3 with the positioning table 5. Coupling can be performed by moving the support rods 3 to the positioning table 5.

The control means is configured, in particular after the support rods 3 are coupled with the positioning table 5, to lower the positioning table from the upper vertical height, dragging each support rod 3 to overcome a friction force between each support rod 3 and the respective hole 4a.

The control means is configured, in particular when the positioning table is lowered from the upper vertical height, to lock selectively each support rod 3 to position the respective locking member 2 vertically in a desired position, and after locking the support rod 3, further lower the positioning table 5removing the coupling between the positioning table 5 and the support rod 3, when the stop means locks the support rod 3, moving the positioning table 5 away from the support rod 3.

The control means is configured, in particular, to receive the position of the support rod 3 from the sensor means and compare the position with the desired position to check that each locking member 2 is positioned correctly, and to emit response signals to signal correct and/or incorrect positioning of the locking member 2. The response signals can comprise, in particular, electric and/or acoustic and/or visual and/or tactile etc signals. The response signals can for example comprise alarm signals.

The control means is configured, in particular, to send response signals to wearable devices and/or mobile devices, and/or a remote PC and/or to a human machine interface (HMI).

The workpiece locking system 1 can be suitable for implementing a locking method for locking a workpiece comprising one or more of the steps disclosed below.

The locking method can comprise, in particular, an initial step in which the positioning table 5 is at a lower vertical height. In the initial step, the positioning table 5 is far from the support means 4 (Figure 1).

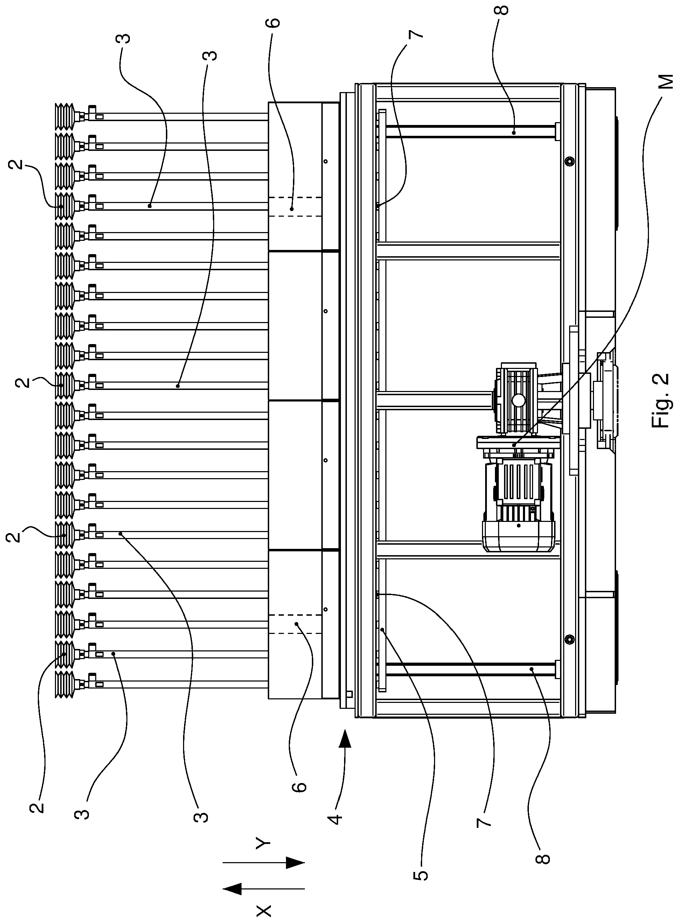

The locking method can comprise, in particular, the step of raising the positioning table 5 vertically (along an elevation direction X). In the raising step, the positioning table 5 pushes the support rods 3 upwards that are arranged for carrying the respective locking members 2. At the end of the raising step, the positioning table 5 is at the upper vertical height in which the positioning table 5 is near the support means 4 (Figure 2).

In particular, the raising step can occur after the initial step, such that the positioning table 5 moves from the lower vertical height (Figure 1) to the upper vertical height (Figure 2).

The workpiece locking method can comprise in particular, a step of removably coupling each support rod 3 with the positioning table 5 with a coupling force. The removable coupling can be performed, in particular, by coupling magnetically magnetic elements 7a with at least one ferromagnetic surface and/or further magnetic elements. Alternatively or additionally, the removable coupling can be performed, in particular, by coupling with interference protrusions obtained on the lower portions of the support rods 3 with respective cavities obtained on the positioning table 5, thus achieving shape coupling.

The locking method can comprise, in particular, a descent step, or a step of lowering (along a lowering direction Y) the positioning table 5. During the step of lowering, the support rods 3 slide inside respective holes 4a obtained in the support means 4. The positioning table 5 drags each support rod 3 (with which it is coupled) so as to overcome a friction force that opposes the sliding of each support rod 3. The descent step can occur after the coupling step.

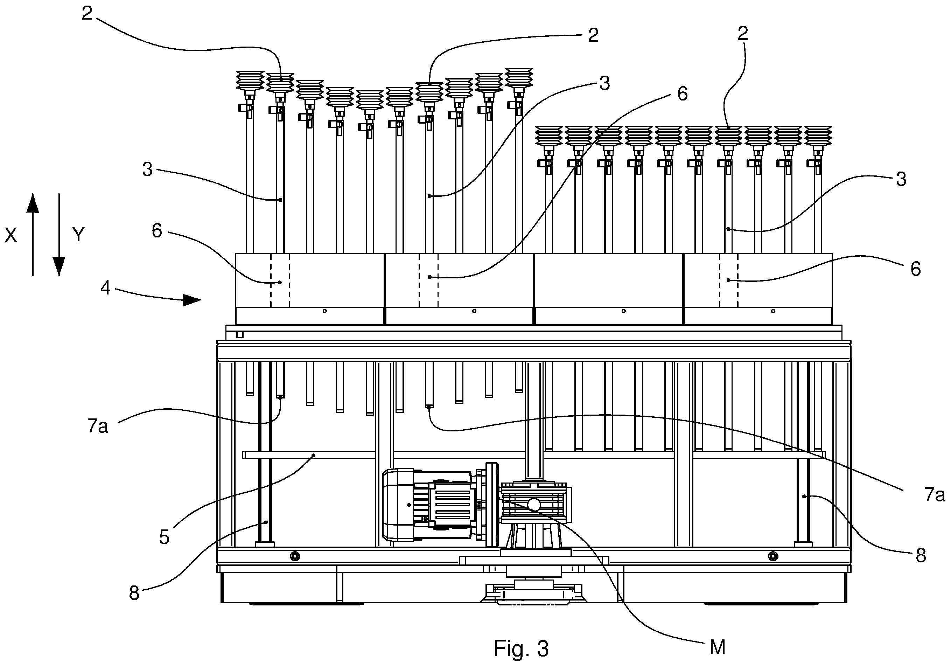

The locking method can comprise, during the lowering step, a step of locking selectively each support rod 3 (Figure 3) to position the respective locking member 2 vertically.

The locking method can comprise, after the locking step, a step of lowering further the positioning table 5 so as to remove the coupling between each support rod 3 and the positioning table 5 when the support rod 3 is locked and move the positioning table 5 away from the support rod 3.

As can be seen from what has been disclosed above, the locking system 1 according to the present invention enables the limits and drawbacks of the prior art to be overcome. The workpiece locking system 1 according to the invention is particularly useful for positioning correctly locking members for maintaining a workpiece being worked, in particular in significant friction conditions, due for example to dirt, or in situations of deformation of components. This is owing to removable coupling means that enables the positioning table to first drag each support rod, overcoming the friction force between the support rod and the respective hole, and then disconnect when the support rod is locked vertically by the stop means.

Despite this, the workpiece locking system 1, in particular owing to the coupling means, enables the engineering of the system to be improved by using simply constructed components, thus simplifying the design, maintenance and installation of the components of the locking system.

## Claims

1. Workpiece locking system (1), comprising:
a. two or more locking members (2) to lock a workpiece;
b. for each locking member (2), a support rod (3) which extends vertically and carries a respective locking member (2), each support rod (3) being vertically movable independently of the other support rods (3) to make possible a vertical positioning of the respective locking member (2) at a different vertical height compared to the other locking members (2);
c. support means (4) comprising two or more holes (4a) within each of which a respective support rod (3) is movable vertically;
d. for each support rod (3), stop means (6) configured to lock the respective support rod (3) in position with respect to said support means (4);
e. at least one positioning table (5) vertically movable with respect to said support means (4), said at least one positioning table (5) being configured to interact in contact with said support rods (3) to vertically move said support rods (3);
f. actuator means (M) configured to move said at least one positioning table (5);
**characterised in that** said workpiece locking system further comprises:
g. for each support rod (3), coupling means (7) configured for removably coupling said at least one positioning table (5) to said support rod (3) so that said at least one positioning table (5) drags said support rod (3) downwards to overcome a frictional force between said support rod (3) and the respective hole (4a), said coupling means (7) being configured to solve the coupling between said at least one positioning table (5) and said support rod (3) when said stop means (6) locks said support rod (3) and said at least one positioning table (5) moves downwards away from said support rod (3), said stop means (6) exerting on said support rod (3) a stopping force greater than a coupling force between said at least one table (5) and said support rod (3).

2. System (1) according to claim 1, wherein said coupling means (7) comprises a protrusion and a cavity shaped to receive with interference said protrusion to achieve a shape coupling, said protrusion comprising, in particular, a pin.

3. System (1) according to claim 1 or 2, wherein said coupling means (7) comprises magnetic coupling means provided with a magnetic element (7a) for realizing a magnetic force coupling.

4. System (1) according to claim 3, wherein said magnetic element (7a) is a permanent magnet or an electromagnet.

5. System (1) according to claim 3 or 4, wherein said magnetic element (7a) is arranged on an end portion of said support rod (3) and said at least one positioning table (5) is provided with at least one ferromagnetic surface arranged below each support rod (3) to be attracted by said magnetic element (7a).

6. System (1) according to any one of the preceding claims, comprising sensor means, in particular of the optical, magnetic, or acoustic, or inductive, or capacitive type, configured to detect the position of said support rod (3), in particular with respect to said support means (4).

7. System (1) according to any one of the preceding claims, comprising control means for carrying out a positioning method of said locking members (2), said control means being configured to perform the following operations:
a. raising said at least one positioning table (5) to an upper vertical height, said at least one positioning table (5) pushing said support rods (3) upwards;
b. removably coupling said support rods (3) with said at least one positioning table (5);
c. after having removably coupled, lowering said at least one positioning table (5) from said upper vertical height, said at least one positioning table (5) dragging each support rod to overcome a frictional force between each support rod (3) and the respective hole (4a);
d. during the operation of lowering, selectively locking each support rod (3) to vertically position the respective locking member (2) in a desired position;
e. after having selectively locked, further lowering said at least one positioning table (5) removing the coupling between said at least one positioning table (5) and said support rod (3) when said stop means (6) lock said support rod (3), said at least one positioning table (5) moving away from said support rod (3).

8. System (1) according to claim 7 when dependent on claim 6, wherein said control means is configured to receive the position of said support rod (3) from said sensor means, and compare said position with said desired position to verify that the positioning of each locking member (2) has occurred correctly, and to emit response signals, in particular acoustic, and/or visual, and/or tactile, to signal a correct and/or incorrect positioning of said locking member (2).

9. Workpiece locking method, comprising the steps of:
a. raising at least one positioning table (5) to an upper vertical height, said at least one positioning table (5) pushing upward support rods (3) arranged to bring respective locking members (2);
b. removably coupling each support rod (3) with said at least one positioning table (5) with a coupling force;
c. after said coupling step, lowering said at least one positioning table (5) from said upper vertical height, said at least one positioning table (5) dragging each support rod (3) to overcome a friction force which opposes the sliding of each support rod (3), said coupling force being greater than said frictional force;
d. during the lowering step, selectively locking each support rod (3) with a stop force to vertically position the respective locking member (2);
e. after said locking step, further lowering said at least one positioning table (5) to remove the coupling between each support rod (3) and said at least one positioning table (5) when said support rod (3) is locked, said at least one table (5) moving away from said support rod (3).

10. Workpiece locking method according to claim 9, wherein said coupling comprises interference coupling a protrusion with a respective cavity to provide a shape coupling.

11. Workpiece locking method according to claim 9 or claim 10, wherein said coupling comprises magnetically coupling a magnetic element (7a) with a ferromagnetic surface and/or a further magnetic element to achieve a magnetic force coupling.

## Patentansprüche

1. Werkstückverriegelungssystem (1), umfassend:
a. zwei oder mehr Verriegelungselemente (2) zum Verriegeln eines Werkstücks;
b. für jedes Verriegelungselement (2) eine Stützstange (3), die sich vertikal erstreckt und ein jeweiliges Verriegelungselement (2) trägt, wobei jede Stützstange (3) unabhängig von den anderen Stützstangen (3) vertikal beweglich ist, um eine vertikale Positionierung des jeweiligen Verriegelungselements (2) in einer anderen vertikalen Höhe im Vergleich zu den anderen Verriegelungselementen (2) zu ermöglichen;
c. Stützmittel (4), die zwei oder mehr Löcher (4a) umfassen, in denen jeweils eine entsprechende Stützstange (3) vertikal beweglich ist;
d. für jede Stützstange (3) ein Anschlagsmittel (6), das so konfiguriert ist, dass sie die jeweilige Stützstange (3) in ihrer Position in Bezug auf das Stützmittel (4) verriegelt;
e. mindestens einen Positioniertisch (5), der in Bezug auf die Stützmittel (4) vertikal beweglich ist, wobei der mindestens eine Positioniertisch (5) so konfiguriert ist, dass er in Kontakt mit den Stützstangen (3) zusammenwirkt, um die Stützstangen (3) vertikal zu bewegen;
f. Betätigungsmittel (M), die so konfiguriert sind, dass sie den mindestens einen Positioniertisch (5) bewegen;
**dadurch gekennzeichnet, dass** das Werkstückverriegelungssystem weiterhin Folgendes umfasst:
g. für jede Stützstange (3) ein Kupplungsmittel (7), das so konfiguriert ist, dass es den mindestens einen Positioniertisch (5) lösbar mit der Stützstange (3) kuppelt, so dass der mindestens eine Positioniertisch (5) die Stützstange (3) nach unten zieht, um eine Reibungskraft zwischen der Stützstange (3) und dem jeweiligen Loch (4a) zu überwinden, wobei die Kopplungsmittel (7) so konfiguriert sind, dass sie die Kupplung zwischen dem mindestens einen Positioniertisch (5) und der Stützstange (3) lösen, wenn das Anschlagmittel (6) die Stützstange (3) arretiert und der mindestens eine Positioniertisch (5) sich von der Stützstange (3) weg nach unten bewegt, wobei das Anschlagmittel (6) auf die Stützstange (3) eine Anhaltekraft ausübt, die größer ist als eine Kopplungskraft zwischen dem mindestens einem Positioniertisch (5) und der Stützstange (3).

2. System (1) nach Anspruch 1, wobei das Kopplungsmittel (7) einen Vorsprung und einen Hohlraum umfasst, der so geformt ist, dass er den Vorsprung mit Interferenz aufnimmt, um eine Formkopplung zu erreichen, wobei der Vorsprung insbesondere einen Stift umfasst.

3. System (1) nach Anspruch 1 oder 2, wobei das Kopplungsmittel (7) ein magnetisches Kopplungsmittel umfasst, das mit einem magnetischen Element (7a) versehen ist, um eine Magnetkraftkopplung zu erreichen.

4. System (1) nach Anspruch 3, wobei das magnetische Element (7a) ein Permanentmagnet oder ein Elektromagnet ist.

5. System (1) nach Anspruch 3 oder 4, wobei das magnetische Element (7a) an einem Endabschnitt der Stützstange (3) angeordnet ist und der mindestens eine Positioniertisch (5) mit mindestens einer ferromagnetischen Oberfläche versehen ist, die unter jeder Stützstange (3) angeordnet ist, um von dem magnetischen Element (7a) angezogen zu werden.

6. System (1) nach einem der vorhergehenden Ansprüche, das Sensormittel, insbesondere vom optischen, magnetischen oder akustischen oder induktiven oder kapazitiven Typ, umfasst, die so konfiguriert sind, dass sie die Position der Stützstange (3), insbesondere in Bezug auf die Stützmittel (4), erfassen.

7. System (1) nach einem der vorhergehenden Ansprüche, das Steuermittel zum Ausführen eines Positionierungsverfahrens der Verriegelungselemente (2) umfasst, wobei die Steuermittel so konfiguriert sind, dass sie die folgenden Vorgänge ausführen:
a. Anheben des mindestens einen Positioniertisches (5) auf eine obere vertikale Höhe, wobei der mindestens eine Positioniertisch (5) die Stützstangen (3) nach oben drückt;
b. Lösbares Verbinden der Stützstangen (3) mit dem mindestens einen Positioniertisch (5);
c. nach dem lösbaren Verbinden Absenken des mindestens einen Positioniertisches (5) aus der oberen vertikalen Höhe, wobei der mindestens eine Positioniertisch (5) jede Stützstange mitzieht, um eine Reibungskraft zwischen jeder Stützstange (3) und dem jeweiligen Loch (4a) zu überwinden;
d. während des Absenkvorgangs, selektives Verriegeln jeder Stützstange (3), um das jeweilige Verriegelungselement (2) in einer gewünschten Position vertikal zu positionieren;
e. nach dem selektiven Verriegeln weiteres Absenken des mindestens einen Positioniertisches (5), wobei die Kopplung zwischen dem mindestens einen Positioniertisch (5) und der Stützstange (3) aufgehoben wird, wenn die Anschlagmittel (6) die Stützstange (3) verriegeln, wobei sich der mindestens eine Positioniertisch (5) von der Stützstange (3) weg bewegt.

8. System (1) nach Anspruch 7, wenn er von Anspruch 6 abhängt, wobei die Steuereinrichtung so konfiguriert ist, dass sie die Position der Stützstange (3) von der Sensoreinrichtung empfängt und die Position mit der gewünschten Position vergleicht, um zu überprüfen, ob die Positionierung jedes Verriegelungselements (2) korrekt erfolgt ist, und dass sie Antwortsignale, insbesondere akustische und/oder visuelle und/oder taktile, aussendet, um eine korrekte und/oder inkorrekte Positionierung des Verriegelungselements (2) zu signalisieren.

9. Verfahren zum Verriegeln von Werkstücken, das die folgenden Schritte umfasst:
a. Anheben mindestens eines Positioniertisches (5) auf eine obere vertikale Höhe, wobei der mindestens eine Positioniertisch (5) Stützstangen (3) nach oben drückt, die so angeordnet sind, dass sie entsprechende Verriegelungselemente (2) bringen;
b. lösbares Verbinden jeder Stützstange (3) mit dem mindestens einen Positioniertisch (5) mit einer Verbindungskraft;
c. nach dem Kopplungsschritt, Absenken des mindestens einen Positionierungstisches (5) von der oberen vertikalen Höhe, wobei der mindestens eine Positionierungstisch (5) jede Stützstange (3) zieht, um eine Reibungskraft zu überwinden, die dem Gleiten jeder Stützstange (3) entgegenwirkt, wobei die Kopplungskraft größer als die Reibungskraft ist;
d. während des Absenkungsschritts, selektives Verriegeln jeder Stützstange (3) mit einer Anschlagskraft, um das jeweilige Verriegelungselement (2) vertikal zu positionieren;
e. nach dem Verriegelungsschritt, weiteres Absenken des mindestens einen Positioniertisches (5), um die Kopplung zwischen jeder Stützstange (3) und dem mindestens einen Positioniertisch (5) zu entfernen, wenn die Stützstange (3) und der mindestens eine Positioniertisch (5) nicht mehr miteinander verbunden sind.

10. Verfahren zum Verriegeln von Werkstücken nach Anspruch 9, wobei die Kopplung die Interferenzkopplung eines Vorsprungs mit einem entsprechenden Hohlraum umfasst, um eine Formkopplung zu schaffen.

11. Verfahren zum Verriegeln von Werkstücken nach Anspruch 9 oder Anspruch 10, wobei die Kopplung die magnetische Kopplung eines magnetischen Elements (7a) mit einer ferromagnetischen Oberfläche und/oder einem weiteren magnetischen Element umfasst, um eine Magnetkraftkopplung zu erreichen.

## Revendications

1. Système de verrouillage de pièce (1), comprenant :
a. deux ou plusieurs éléments de verrouillage (2) pour verrouiller une pièce ;
b. pour chaque élément de verrouillage (2), une tige de support (3) qui s'étend verticalement et transporte un élément de verrouillage (2) respectif, chaque tige de support (3) pouvant être déplacée verticalement indépendamment des autres tiges de support (3) pour rendre possible un positionnement vertical de l'élément de verrouillage (2) respectif à une hauteur verticale différente en comparaison avec les autres éléments de verrouillage (2) ;
c. des moyens de support (4) comprenant deux ou plusieurs trous (4a) à l'intérieur de chacun desquels une tige de support (3) respective peut être déplacée verticalement ;
d. pour chaque tige de support (3), des moyens d'arrêt (6) configurés pour verrouiller la tige de support (3) respective en position par rapport auxdits moyens de support (4) ;
e. au moins une table de positionnement (5) pouvant être déplacée verticalement par rapport auxdits moyens de support (4), ladite au moins une table de positionnement (5) étant configurée pour interagir en contact avec lesdites tiges de support (3) pour déplacer verticalement lesdites tiges de support (3) ;
f. des moyens d'actionnement (M) configurés pour déplacer ladite au moins une table de positionnement (5) ;
**caractérisé en ce que** ledit système de verrouillage de pièce comprend en outre :
g. pour chaque tige de support (3), des moyens de couplage (7) configurés pour coupler de manière amovible ladite au moins une table de positionnement (5) à ladite tige de support (3) de telle sorte que ladite au moins une table de positionnement (5) tire ladite tige de support (3) vers le bas pour faire face à une force de friction entre ladite tige de support (3) et le trou (4a) respectif, lesdits moyens de couplage (7) étant configurés pour défaire le couplage entre ladite au moins une table de positionnement (5) et ladite tige de support (3) lorsque lesdits moyens d'arrêt (6) verrouillent ladite tige de support (3) et ladite au moins une table de positionnement (5) se déplace vers le bas de manière à s'éloigner de ladite tige de support (3), lesdits moyens d'arrêt (6) exerçant sur ladite tige de support (3) une force d'arrêt supérieure à une force de couplage entre ladite au moins une table (5) et ladite tige de support (3).

2. Système (1) selon la revendication 1, dans lequel lesdits moyens de couplage (7) comprennent une partie faisant saillie et une cavité façonnée pour recevoir avec une interférence ladite partie faisant saillie pour finaliser un couplage de forme, ladite partie faisant saillie comprenant en particulier une broche.

3. Système (1) selon la revendication 1 ou 2, dans lequel lesdits moyens de couplage (7) comprennent des moyens de couplage magnétique fournis avec un élément magnétique (7a) pour réaliser un couple de force magnétique.

4. Système (1) selon la revendication 3, dans lequel ledit élément magnétique (7a) est un aimant permanent ou un électroaimant.

5. Système (1) selon la revendication 3 ou 4, dans lequel ledit élément magnétique (7a) est disposé sur une partie d'extrémité de ladite tige de support (3) et ladite au moins une table de positionnement (5) est fournie avec au moins une surface ferromagnétique disposée sous chaque tige de support (3) pour être attirée par ledit élément magnétique (7a).

6. Système (1) selon l'une des revendications précédentes, comprenant des moyens de détection, en particulier de type optique, magnétique, ou acoustique, ou inductif ou capacitif, configurés pour détecter la position de ladite tige de support (3), en particulier par rapport auxdits moyens de support (4).

7. Système (1) selon l'une des revendications précédentes, comprenant des moyens de commande pour réaliser un procédé de positionnement desdits éléments de verrouillage (2), lesdits moyens de commande étant configurés pour effectuer les opérations suivantes :
a. élévation de l'au moins une table de positionnement (5) à une hauteur verticale supérieure, ladite au moins une table de positionnement (5) poussant lesdites tiges de support (3) vers le haut ;
b. couplage amovible desdites tiges de support (3) à ladite au moins une table de positionnement (5) ;
c. une fois le couplage amovible effectué, abaissement de ladite au moins une table de positionnement (5) depuis ladite hauteur verticale supérieure, ladite au moins une table de positionnement (5) tirant chaque tige de support pour faire face à une force de friction entre chaque tige de support (3) et le trou (4a) respectif ;
d. au cours de l'opération d'abaissement verrouillage sélectif de chaque tige de support (3) pour positionner verticalement l'élément de verrouillage (2) respectif dans une position souhaitée ;
e. une fois le verrouillage sélectif effectué, poursuite de l'abaissement de ladite au moins une table de positionnement (5) en supprimant le couplage entre ladite au moins une table de positionnement (5) et ladite tige de support (3) lorsque lesdits moyens d'arrêt (6) verrouillent ladite tige de support (3), ladite au moins une table de positionnement (5) se déplaçant de manière à s'éloigner de ladite tige de support (3).

8. Système (1) selon la revendication 7 lorsqu'elle dépend de la revendication 6, dans lequel lesdits moyens de commande sont configurés pour recevoir la position de ladite tige de support (3) desdits moyens de détection, et pour comparer ladite position à ladite position souhaitée pour vérifier que le positionnement de chaque élément de verrouillage (2) s'est produit en bonne et due forme, et pour émettre des signaux de réponse, en particulier acoustiques, et/ou visuels, et/ou tactiles, pour signaler un positionnement correct et/ou incorrect dudit élément de verrouillage (2).

9. Procédé de verrouillage de pièce, comprenant les étapes de :
a. d'élévation de l'au moins une table de positionnement (5) à une hauteur verticale supérieure, ladite au moins une table de positionnement (5) poussant vers le haut des tiges de support (3) disposées pour amener des éléments de verrouillage (2) respectifs ;
b. de couplage amovible de chaque tige de support (3) à au moins une table de positionnement (5) avec une force de couplage ;
c. après ladite étape de couplage, d'abaissement de ladite au moins une table de positionnement (5) depuis ladite hauteur verticale supérieure, ladite au moins une table de positionnement (5) tirant chaque tige de support (3) pour faire face à une force de friction qui s'oppose au glissement de chaque tige de support (3), ladite force de couplage étant supérieure à ladite force de friction ;
d. au cours de l'étape d'abaissement, de verrouillage sélectif de chaque tige de support (3) avec une force d'arrêt pour positionner verticalement l'élément de verrouillage (2) respectif ;
e. après ladite étape de verrouillage, la poursuite de l'abaissement de ladite au moins une table de positionnement (5) pour supprimer le couplage entre chaque tige de support (3) et ladite au moins une table de positionnement (5) lorsque ladite tige de support (3) est verrouillée, ladite au moins une table (5) se déplaçant de manière à s'éloigner de ladite tige de support (3).

10. Procédé de verrouillage de pièce selon la revendication 9, dans lequel ledit couplage comprend le couplage avec interférence d'une partie faisant saillie à une cavité respective pour fournir un couplage de forme.

11. Procédé de verrouillage de pièce selon la revendication 9 ou la revendication 10, dans lequel ledit couplage comprend le couplage magnétique d'un élément magnétique (7a) à une surface ferromagnétique et/ou à un autre élément magnétique pour finaliser un couplage de force magnétique.
